# EUROPÄISCHE PATENTSCHRIFT

(11) **EP 3 830 448 B1**
(45) Veröffentlichungstag und Bekanntmachung des Hinweises auf die Patenterteilung: **12.04.2023**
(21) Anmeldenummer: 19735215.6
(22) Anmeldetag: 06.06.2019
(51) Int. Cl.: F16H 57/00, F16H 61/02, F16H 61/688, F16H 3/00

(54) **VERFAHREN ZUM UNTERDRÜCKEN VON GERÄUSCHEN IN EINEM DOPPELKUPPLUNGSGETRIEBE FÜR EIN KRAFTFAHRZEUG**
METHOD FOR SUPPRESSING NOISES IN A DUAL CLUTCH TRANSMISSION FOR A MOTOR VEHICLE
PROCÉDÉ POUR SUPPRIMER LES BRUITS DANS UNE BOÎTE DE VITESSES À DOUBLE EMBRAYAGE POUR UN VÉHICULE AUTOMOBILE

(30) Priorität: 27.07.2018 DE 102018212595
(43) Veröffentlichungstag der Anmeldung: 09.06.2021
(73) Patentinhaber: Audi AG, 85045 Ingolstadt (DE)
(72) Erfinder: FLEISCHMANN, Hans-Peter, 85134 Stammham (DE); GUNDLACH, Lutz, 85049 Ingolstadt (DE)
(74) Vertreter: Bierschneider, Walter
(86) Internationale Anmeldenummer: PCT/EP2019/064843
(87) Internationale Veröffentlichungsnummer: WO 2020/020527

(56) Entgegenhaltungen:
- DE-B4-102008 032 757
- BENJAMIN HEUMESSER ET AL: "Rattle noises of dual clutch transmissions", FORSCHUNG IM INGENIEURWESEN: ENGINEERING RESEARCH, Bd. 82, Nr. 3, 16. Mai 2018 (2018-05-16), Seiten 187-195, XP055573424, DE ISSN: 0015-7899, DOI: 10.1007/s10010-018-0268-y

## Beschreibung

### BESCHREIBUNG:

Die Erfindung betrifft ein Verfahren zum Unterdrücken von Geräuschen in einem Doppelkupplungsgetriebe für ein Kraftfahrzeug, insbesondere für einen Kraftwagen, gemäß dem Oberbegriff von Patentanspruch 1.

Die DE 102 44 026 A1 offenbart ein Verfahren zur Reduzierung von Schwingungen in einem Kraftfahrzeug, bei dem von einer Steuerungs- und Regelungsvorrichtung mittels geeigneter Sensoren die störenden Schwingungen festgestellt und bei Überschreiten von zuvor festgelegten Grenzwerten durch die Steuerungs- und Regelungsvorrichtung wenigstens eines Vorrichtung derart betätigt wird, dass die störende Schwingung vollständig beseitigt oder zumindest in ihrer Amplitude gedämpft wird. Dabei ist es vorgesehen, dass die wenigstens eine Vorrichtung derart auf wenigstens ein rotierendes Bauteil im Fahrzeugantriebsstrang einwirkt, das letzteres oder letztere beim Auftreten der Schwingungen kontinuierlich oder periodisch in ihrer Drehbewegung abgebremst oder zu einer Kompensationsschwingung angeregt werden.

Aus der DE 10 2009 014 705 B4 ist ein Doppelkupplungsgetriebe bekannt mit einer ersten Eingangswelle und einer zweiten Eingangswelle sowie mit wenigstens einer Abtriebswelle, die mit den Eingangswellen über Radsätze verbunden ist.

Des Weiteren offenbart DE 10 2012 221 483 A1 ein Doppelkupplungsgetriebe in einem Kraftfahrzeug mit zwei Teilgetrieben mit jeweils einer Getriebeeingangswelle, welche mittels einer Reibungskupplung mit einer Antriebswelle einer Antriebseinheit koppelbar sind.

Darüber hinaus ist der DE 10 2008 032 757 B4 ein Verfahren zur Unterdrückung von Getriebegeräuschen in einem Doppelkupplungsgetriebe für ein Kraftfahrzeug als bekannt zu entnehmen.

Folgender Aufsatz offenbart ein Verfahren zum Unterdrücken von Geräuschen in einem Doppelkupplungsgetriebe, wobei das beschriebene Verfahren unter den Wortlaut des Oberbegriffs des Anspruchs 1 fällt: Benjamin Heumesser ET AL: "Rattle noises of dual clutch transmissions", FORSCHUNG IM INGENIEURWESEN: ENGINEERING RESEARCH, Bd. 82, Nr. 3, 16. Mai 2018 (2018-05-16), Seiten 187-195, XP055573424,DE ISSN: 0015-7899, DOI: 10.1007/s10010-018-0268-y.

Aufgabe der vorliegenden Erfindung ist es, ein Verfahren zu schaffen, so dass sich auf besonders einfache und kostengünstige Weise ein besonders vorteilhaftes Geräuschverhalten realisieren lässt.

Diese Aufgabe wird erfindungsgemäß durch ein Verfahren mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die in Anspruch 1 beanspruchte Erfindung betrifft ein Verfahren zum Unterdrücken von Geräuschen in einem zwei Teilgetriebe und je Teilgetriebe wenigstens zwei Synchronisiereinrichtungen aufweisenden Doppelkupplungsgetriebe für ein Kraftfahrzeug, insbesondere für einen Kraftwagen und vorzugsweise für einen Personenkraftwagen. Mit anderen Worten weist das Doppelkupplungsgetriebe wenigstens oder genau zwei Teilgetriebe auf. Das jeweilige Teilgetriebe weist wenigstens zwei Synchronisiereinrichtungen auf. Mittels der jeweiligen Synchronisiereinrichtung ist eine jeweilige Welle des jeweiligen Teilgetriebes mit einem jeweiligen, auf der jeweiligen Welle angeordneten und der jeweiligen Synchronisiereinrichtung zugeordneten Losrad des jeweiligen Teilgetriebes zu synchronisieren. Dies bedeutet, dass das jeweilige Teilgetriebe wenigstens eine Welle aufweist, wobei der jeweiligen Synchronisiereinrichtung des jeweiligen Teilgetriebes wenigstens oder genau ein Losrad zugeordnet ist. Somit umfasst das jeweilige Teilgetriebe auch die Losräder des jeweiligen Teilgetriebes. Das jeweilige Losrad ist vorzugsweise ein Zahnrad, welches drehbar auf der jeweiligen Welle des jeweiligen Teilgetriebes angeordnet ist, so dass das jeweilige Losrad relativ zur jeweiligen Welle des jeweiligen Teilgetriebes gedreht werden kann, wenn das jeweilige Losrad nicht drehfest mit der jeweiligen Welle des jeweiligen Teilgetriebes verbunden ist. Da beispielsweise zunächst das jeweilige Losrad nicht drehfest mit der jeweiligen Welle des jeweiligen Teilgetriebes verbunden ist, kann es zu unterschiedlichen Drehzahlen des jeweiligen Losrads und der jeweiligen Welle des jeweiligen Teilgetriebes und somit zu einer Drehzahldifferenz zwischen dem jeweiligen Losrad und der jeweiligen Welle des jeweiligen Teilgetriebes kommen.

Unter der Drehzahldifferenz ist zu verstehen, dass sich die jeweilige Welle relativ zu dem jeweiligen Losrad des jeweiligen Teilgetriebes dreht. Die jeweilige Synchronisiereinrichtung, welcher das jeweilige Losrad zugeordnet ist, kann genutzt werden beziehungsweise wird genutzt, um die zuvor beschriebene Drehzahldifferenz zwischen der Welle und dem der jeweiligen Synchronisiereinrichtung zugeordneten Losrad zumindest zu verringern und vorzugsweise aufzuheben. Infolge des Verringerns beziehungsweise Aufhebens der Drehzahldifferenz zwischen der jeweiligen Welle und dem jeweiligen Losrad kann das jeweilige Losrad drehfest, insbesondere formschlüssig drehfest, mit der jeweiligen Welle verbunden werden, ohne dass es zu übermäßigen Belastungen des Doppelkupplungsgetriebes kommt. Das Reduzieren beziehungsweise Aufheben der Drehzahldifferenz, welche auch als Drehzahlunterschied bezeichnet wird, wird auch als Synchronisieren oder Synchronisation bezeichnet, wobei im Rahmen der Synchronisation jeweilige Drehzahlen des jeweiligen Losrads und der jeweiligen Welle aneinander angeglichen werden.

Im Rahmen der Synchronisation werden beispielsweise das jeweilige Losrad und die jeweilige Welle über die Synchronisiereinrichtung, welcher das Losrad zugeordnet ist, zumindest oder ausschließlich reibschlüssig, das heißt durch Reibung, gekoppelt. Die Synchronisiereinrichtung kann dabei als herkömmliche Synchronisiereinrichtung ausgebildet sein, wie sie aus dem allgemeinen Stand der Technik, insbesondere aus dem Fahrzeugbau, bereits hinlänglich bekannt ist. Insbesondere kann die Synchronisiereinrichtung als Sperrsynchronisation ausgebildet sein und/oder wenigstens zwei Reibpartner aufweisen. Einer der Reibpartner ist beispielsweise ein Synchronring, wobei der andere Reibpartner beispielsweise ein Kupplungskörper ist. Der Kupplungskörper ist beispielsweise drehfest mit dem Losrad, welches der Synchronisiereinrichtung zugeordnet ist, verbunden. Der Synchronring ist beispielsweise in axialer Richtung des Losrads relativ zu diesem und relativ zu dem Kupplungskörper verschiebbar und beispielsweise mit einer auch als Schaltmuffe bezeichneten Schiebemuffe mitdrehbar, welche wiederum mit der jeweiligen Welle mitdrehbar ist. Dabei kann auch die Schiebemuffe Bestandteil der Synchronisiereinrichtung sein.

Um nun Geräusche in dem Doppelkupplungsgetriebe auf besonders einfache und kostengünstig Weise unterdrücken zu können, so dass sich auf besonders einfache und kostengünstige Weise ein besonders vorteilhaftes Geräuschverhalten des Doppelkupplungsgetriebes und somit des Kraftfahrzeugs insgesamt realisieren lässt, ist es erfindungsgemäß vorgesehen, dass zum Unterdrücken von Geräuschen des Doppelkupplungsgetriebes eine der wenigstens zwei

Synchronisiereinrichtungen eines der Teilgetriebe, insbesondere aktiv beziehungsweise gezielt, betätigt wird, während das eine Teilgetriebe aktiviert beziehungsweise aktiv ist, das andere Teilgetriebe deaktiviert beziehungsweise passiv ist und ein Losrad, welches einer der wenigstens einen anderen der wenigstens zwei Synchronisiereinrichtungen des einen Teilgetriebes zugeordnet ist, drehfest mit der Welle des einen Teilgetriebes verbunden ist.

Unter dem Merkmal, dass das eine Teilgetriebe aktiviert beziehungsweise aktiv ist, ist zu verstehen, dass über das aktivierte eine Teilgetriebe wenigstens ein Drehmoment, insbesondere von einem Antriebsmotor, auf eine Ausgangswelle übertragbar ist beziehungsweise übertragen wird. Das Drehmoment wird beispielsweise von dem Antriebsmotor bereitgestellt, wobei der Antriebsmotor beispielsweise als Verbrennungskraftmaschine oder aber Elektromotor ausgebildet sein kann. Dies bedeutet beispielsweise, dass ein Drehmomentenfluss, über welchen das, insbesondere von dem Antriebsmotor bereitgestellte, Drehmoment von dem Antriebsmotor auf die Ausgangswelle übertragbar ist beziehungsweise übertragen wird, durch das eine, aktivierte Teilgetriebe geschlossen ist beziehungsweise über das eine Teilgetriebe verläuft.

Mit anderen Worten ist das eine Teilgetriebe in dem Drehmomentenfluss stromab des Antriebsmotors und stromauf der Ausgangswelle angeordnet. Wieder mit anderen Worten ausgedrückt ist beispielsweise ein erster Übertragungspfad vorgesehen, über welchen das von dem Antriebsmotor bereitgestellte Drehmoment von dem Antriebsmotor über das eine Teilgetriebe auf die Ausgangswelle übertragen werden kann. Dabei ist im Rahmen des erfindungsgemäßen Verfahrens der erste Übertragungspfad geschlossen, so dass das von dem Antriebsmotor bereitgestellte Drehmoment von dem Antriebsmotor auf das eine, aktivierte Teilgetriebe und von dem einen, aktivierten Teilgetriebe auf die Ausgangswelle übertragen wird. Dadurch wird das Drehmoment von dem Antriebsmotor über das eine, aktivierte Teilgetriebe auf die Ausgangswelle übertragen. Hierzu ist ein Losrad, welches der wenigstens einen anderen der wenigstens zwei Synchronisiereinrichtungen des einen Teilgetriebes zugeordnet ist, drehfest mit der Welle des einen Teilgetriebes verbunden, wodurch beispielsweise ein das Losrad, welches der wenigstens einen anderen der wenigstens zwei Synchronisiereinrichtungen des einen Teilgetriebes zugeordnet ist, umfassender Gang des einen, aktivierten Teilgetriebes des Doppelkupplungsgetriebes eingelegt beziehungsweise geschaltet ist.

Unter dem Merkmal, dass das andere Teilgetriebe deaktiviert beziehungsweise passiv ist, ist zu verstehen, dass ein Übertragen des von dem anderen Antriebsmotor bereitgestellten Drehmoments über das andere, passive beziehungsweise deaktivierte Teilgetriebe auf die Ausgangswelle unterbleibt, so dass kein Drehmomentenfluss von dem Antriebsmotor über das andere passive Teilgetriebe auf die Ausgangswelle stattfindet. Wieder mit anderen Worten ausgedrückt ist beispielsweise ein zweiter Übertragungspfad vorgesehen, über welchen das von dem Antriebsmotor bereitgestellte Drehmoment von dem Antriebsmotor auf die Ausgangswelle übertragen werden kann. In dem ersten Übertragungspfad ist das eine Teilgetriebe angeordnet. Das andere Teilgetriebe ist in dem zweiten Übertragungspfad angeordnet.

Wenn das eine Teilgetriebe aktiv beziehungsweise aktiviert ist, ist der erste Übertragungspfad geschlossen, so dass das von dem Antriebsmotor bereitgestellte Drehmoment von dem Antriebsmotor über das eine, aktivierte Teilgetriebe auf die Ausgangswelle übertragen wird. Da das andere Teilgetriebe passiv beziehungsweise deaktiviert ist, ist der zweite Übertragungspfad geöffnet, sodass das das von dem Antriebsmotor bereitgestellte Drehmoment nicht über das andere Teilgetriebe auf die Ausgangswelle übertragen wird.

Während somit der erste Übertragungspfad geschlossen ist, ist der zweite Übertragungspfad geöffnet. Wäre beispielsweise der erste Übertragungspfad geöffnet und der zweite Übertragungspfad geschlossen, so würde das von dem Antriebsmotor bereitgestellte Drehmoment von dem Antriebsmotor über das andere Teilgetriebe und nicht über das eine Teilgetriebe auf die Ausgangswelle übertragen werden, so dass dann ein Drehmomentenfluss von dem Antriebsmotor über das andere Teilgetriebe auf die Ausgangswelle stattfände. Bezogen auf diesen Drehmomentenfluss wäre dann das andere Teilgetriebe stromab des Antriebsmotors und stromauf der Ausgangswelle angeordnet. Beim Unterdrücken von Geräuschen beziehungsweise während des erfindungsgemäßen Verfahrens jedoch ist das eine Teilgetriebe aktiviert, und das andere Teilgetriebe ist deaktiviert.

Insbesondere kann vorgesehen sein, dass dem ersten Teilgetriebe eine erste Kupplung und dem zweiten Teilgetriebe eine zweite Kupplung des Doppelkupplungsgetriebes zugeordnet ist. Dabei weist der Antriebsmotor beispielsweise eine Abtriebswelle auf, welche als Kurbelwelle ausgebildet sein kann. Das eine Teilgetriebe ist beispielsweise dadurch aktiviert, während das andere Teilgetriebe deaktiviert ist, dass die erste Kupplung geschlossen geschlossen ist, während die zweite Kupplung geöffnet ist. Dadurch kann das von dem Antriebsmotor, insbesondere über die Abtriebswelle, bereitgestellte Drehmoment von der Abtriebswelle über die erste Kupplung auf das eine Teilgetriebe übertragen und in das eine Teilgetriebe eingeleitet werden beziehungsweise das von dem Antriebsmotor, insbesondere der Abtriebswelle, bereitgestellte Drehmoment wird von der Abtriebswelle über die geschlossene erste Kupplung auf das eine Teilgetriebe übertragen und in das eine Teilgetriebe eingeleitet, insbesondere während ein Übertragen des Drehmoments von der Abtriebswelle über die zweite Kupplung auf das andere Teilgetriebe unterbleibt, da die zweite Kupplung geöffnet ist. Um beispielsweise das eine Teilgetriebe zu deaktivieren und das andere Teilgetriebe zu aktivieren, wird die erste Kupplung geöffnet und die zweite Kupplung geschlossen.

Das Doppelkupplungsgetriebe ist beispielsweise zwischen einem Kopplungszustand und einem Entkoppelungszustand umschaltbar. In dem Entkopplungszustand ist das Losrad, welches der wenigstens einen anderen der wenigstens zwei Synchronisiereinrichtungen des einen Teilgetriebes zugeordnet ist, von der Welle des einen Teilgetriebes entkoppelt, so dass das Losrad, welches der wenigstens einen anderen der wenigstens zwei Synchronisiereinrichtungen des einen Teilgetriebes zugeordnet ist, relativ zu der Welle des einen Teilgetriebes drehbar ist beziehungsweise so dass sich das Losrad, welches der anderen Synchronisiereinrichtung des einen Teilgetriebes zugeordnet ist, relativ zu der Welle des einen Teilgetriebes dreht. In dem Kopplungszustand jedoch ist das Losrad, welches der wenigstens einen anderen der wenigstens zwei Synchronisiereinrichtungen des einen Teilgetriebes zugeordnet ist, drehfest mit der Welle des einen Teilgetriebes verbunden. Hierdurch wird beispielsweise das von dem Antriebsmotor, insbesondere über die Abtriebswelle, bereitgestellte Drehmoment, welches beispielsweise von der Abtriebswelle über die erste Kupplung auf das eine Teilgetriebe übertragen und damit in das eine Teilgetriebe eingeleitet wird, über das Losrad, welches der wenigstens einen anderen der wenigstens zwei Synchronisiereinrichtungen des einen Teilgetriebes zugeordnet ist, auf die Ausgangswelle übertragen beziehungsweise das Drehmoment wird von dem Losrad, welches der wenigstens einen anderen der wenigstens zwei Synchronisiereinrichtungen des einen Teilgetriebes zugeordnet ist, auf die Welle übertragen oder umgekehrt. Wieder mit anderen Worten ausgedrückt befindet sich dann das Losrad, welches der wenigstens einen anderen der wenigstens zwei Synchronisiereinrichtungen des einen Teilgetriebes zugeordnet ist, in dem Drehmomentenfluss beziehungsweise in dem geschlossenen ersten Übertragungspfad.

Unter dem Merkmal, dass die eine der wenigstens zwei Synchronisiereinrichtungen des einen Teilgetriebes aktiviert beziehungsweise gezielt betätigt wird, ist insbesondere zu verstehen, dass diese eine Synchronisiereinrichtung, insbesondere wenigstens ein Aktor dieser einen Synchronisiereinrichtung, gezielt beziehungsweise aktiv, insbesondere von einer elektronischen Recheneinrichtung, angesteuert wird. Die elektronische Recheneinrichtung wird auch als Steuergerät bezeichnet. Durch das Ansteuern dieser einen Synchronisiereinrichtung, insbesondere des Aktors, werden beispielsweise die zuvor genannten Reibpartner der einen Synchronisiereinrichtung in gegenseitigen Kontakt, das heißt in gegenseitigen Reibkontakt, gebracht, wodurch Reibung zwischen den Reibpartnern auftritt. Durch diese Reibung wirken die Reibpartner drehmomentübertragend zusammen, wodurch das Doppelkupplungsgetriebe beziehungsweise Schwingungen des Doppelkupplungsgetriebes aktiv gedämpft werden können. Ist beispielsweise diese eine Synchronisiereinrichtung unbetätigt, so sind die Reibpartner voneinander beabstandet, so dass die Reibpartner sich nicht in gegenseitigem Kontakt befinden und daher keine Reibung zwischen ihnen auftritt. Dies bedeutet, dass durch gezieltes beziehungsweise aktives Betätigen dieser einen Synchronisiereinrichtung eine aktive Dämpfung in dem auch als Getriebe bezeichneten Doppelkupplungsgetriebe bewirkt werden kann, wodurch ein besonders vorteilhaftes Akustikverhalten dargestellt werden kann.

Der Erfindung liegen insbesondere die folgenden Erkenntnisse zugrunde: Triebstränge in Fahrzeugen umfassen üblicherweise Wechselgetriebe, wie beispielsweise Doppelkupplungsgetriebe, Kupplungen und Achsgetriebe. Solche Triebstränge weisen konstruktionsbedingt Stellen beziehungsweise Bereiche auf, welche reibungsbehaftet sind. Die Höhe beziehungsweise das Maß der Reibung, welche beispielsweise als Schleppmoment gemessen kann, kann als Dämpfung positiv sein, da diese Dämpfung einem Freischwingen unterschiedlicher Bauteile, wie beispielsweise Losräder, entgegenwirken kann. Hierdurch kann ein positives akustisches Verhältnis im Fahrzeug erreicht werden. Andererseits jedoch ist diese Reibung bezüglich Verlusten im Triebstrang negativ. Die Überwindung dieser Reibung erfordert nämlich zusätzliche Antriebsenergie. Aktuelle Entwicklungen mit verstärktem Fokus auf verbrauchsoptimierte Triebstränge führen deswegen zu einem verschärften Zielkonflikt im Hinblick auf eine schlechte Akustik in Fahrzeug.

Das erfindungsgemäße Verfahren ermöglicht es, den zuvor genannten Zielkonflikt aufzuheben und somit reibungsreduzierende und in der Folge verbrauchsreduzierende beziehungsweise verbrauchsoptimierende Maßnahmen an beziehungsweise in dem Doppelkupplungsgetriebe umzusetzen, so dass ein besonders hoher Wirkungsgrad des Doppelkupplungsgetriebes realisiert werden kann. Des Weiteren kann trotz der reibungsreduzierenden Maßnahmen ein vorteilhaftes Geräuschverhalten realisiert werden, da durch das gezielte beziehungsweise aktive Betätigen der einen Synchronisiereinrichtung eine bedarfsgerechte Reibung zwischen den Reibpartnern beziehungsweise eine bedarfsgerechte und aktive Dämpfung realisiert werden kann. Die Betätigung der einen Synchronisiereinrichtung ist insbesondere hinsichtlich ihres Schaltwegs zu überwachen beziehungsweise zu begrenzen, um ein gleichzeitige Einlegen von zwei Gängen des einen Teilgetriebes sicher zu verhindern. Dies erfolgt gemäß Anspruch 1 durch Begrenzung des Schaltwegs der einen der wenigstens zwei Synchronisiereinrichtungen, was gemäß Anspruch 1 durch eine Schaltwegmessung überwacht wird. Unter dem Schaltweg ist beispielsweise ein Weg zu verstehen, um den diese eine Synchronisiereinrichtung, insbesondere wenigstens ein Synchronisierelement dieser einen Synchronisiereinrichtung, in axialer Richtung des Losrads, welches dieser einen Synchronisiereinrichtung zugeordnet ist, bewegt werden kann, insbesondere relativ zu dem Losrad, welches dieser einen Synchronisiereinrichtung zugeordnet ist. Der maximale Schaltweg kann beispielsweise bis zu einer Vorsynchronisierung ausgeführt werden.

Das gezielte beziehungsweise aktive Betätigen dieser einen Synchronisiereinrichtung ermöglicht eine situative Dämpfung von Schwingungen. Dies bedeutet, dass beispielsweise während eines Betriebs beziehungsweise während einer Betriebsdauer des Doppelkupplungsgetriebes diese eine Synchronisiereinrichtung nur vorübergehend beziehungsweise kurzzeitig, insbesondere während jeweiliger Zeitdauern, betätigt wird und ansonsten während des Betriebs beziehungsweise während der Betriebsdauer unbetätigt bleibt, so dass ein besonders effizienter und somit kraftstoffverbrauchsarmer Betrieb realisiert werden kann. Dies bedeutet, dass das Betätigen dieser einen Synchronisiereinrichtung vorzugsweise ausschließlich in Zeiträumen mit akustischer Auffälligkeit stattfindet und vorzugsweise ansonsten unterbleibt.

Außerdem wird bei dem erfindungsgemäßen Verfahren die ohnehin vorgesehene eine Synchronisiereinrichtung genutzt, um Schwingungen zu dämpfen. Dadurch können konzeptionelle Mehraufwendungen, das heißt zusätzliche, zum Dämpfen vorgesehene Bauelemente vermieden werden, so dass die Teileanzahl, das Gewicht, der Bauraumbedarf und die Kosten des Doppelkupplungsgetriebes besonders gering gehalten werden können. Mit anderen Worten ist das erfindungsgemäße Verfahren durch bereits vorhandene Bauelemente realisierbar und dadurch besonders kostengünstig umsetzbar.

Da die eine Synchronisiereinrichtung des einen, aktivierten Teilgetriebes betätigt wird, während das Losrad, welches der anderen Synchronisiereinrichtung des einen Teilgetriebes zugeordnet ist, drehfest mit der Welle des einen Teilgetriebes verbunden ist, das heißt während ein Gang des einen, aktivierten Teilgetriebes eingelegt ist, werden zwei Gänge des einen, aktivierten Teilgetriebes gleichzeitig betätigt, vorzugsweise ohne das Losrad, welches der einen Synchronisiereinrichtung zugeordnet ist, drehfest mit der Welle des einen Teilgetriebes zu verbinden. Hierdurch wird dadurch eine innere Verspannung gezielt realisiert, wodurch Schwingungen gedämpft und somit unerwünschte Geräusche vermieden werden können.

In besonders vorteilhafter Ausgestaltung der Erfindung wird die eine Synchronisiereinrichtung des einen Teilgetriebes derart betätigt, dass ein drehfestes Verbinden des der einen Synchronisiereinrichtung zugeordneten Losrads des einen Teilgetriebes mit der Welle des einen Teilgetriebes unterbleibt. Dadurch kann ein gleichzeitiges Einlegen beziehungsweise Schalten von zwei Gängen des einen Teilgetriebes sicher vermieden werden, so dass übermäßige Belastungen und Beschädigungen des Doppelkupplungsgetriebes und damit einhergehende Geräusche vermieden werden können.

Um ein besonders vorteilhaftes Geräuschverhalten zu realisieren, ist es in weiterer Ausgestaltung der Erfindung vorgesehen, dass die Betätigung der einen Synchronisiereinrichtung während einer Zeitspanne, insbesondere durchgängig beziehungsweise unterbrechungsfrei, beibehalten wird, insbesondere während ein drehfestes Verbinden des der anderen Synchronisiereinrichtung zugeordneten Losrads des einen Teilgetriebes mit der Welle des einen Teilgetriebes unterbleibt. Unter dem Merkmal, dass während der Zeitspanne die Betätigung durchgängig beziehungsweise unterbrechungsfrei beibehalten wird, ist zu verstehen, dass während der Zeitspanne ein Aufheben beziehungsweise Beenden der Betätigung der einen Synchronisiereinrichtung unterbleibt. Dadurch können Schwingungen besonders effektiv und effizient gedämpft werden.

Um dabei unerwünschte Geräusche besonders gut vermeiden zu können, ist es in weiterer Ausgestaltung der Erfindung vorgesehen, dass die Zeitspanne länger als eine Sekunde, insbesondere länger als fünf Sekunden und vorzugsweise länger als zehn Sekunden ist.

Um ein besonders vorteilhaftes Geräuschverhalten sowie einen besonders effizienten Betrieb gewährleisten zu können, ist es bei einer weiteren Ausführungsform der Erfindung vorgesehen, dass die Betätigung der einen Synchronisiereinrichtung nach der Zeitspanne, welche auch als erste Zeitspanne bezeichnet wird, beendet wird, so dass sich an die erste Zeitspanne eine zweite Zeitspanne anschließt, während welcher die eine Synchronisiereinrichtung unbetätigt ist, das eine Teilgetriebe aktiviert ist, das andere Teilgetriebe deaktiviert ist und das Losrad, welches der anderen Synchronisiereinrichtung des einen Teilgetriebes zugeordnet ist, drehfest mit der Welle des einen Teilgetriebes verbunden ist.

Dabei hat es sich als besonders vorteilhaft gezeigt, wenn die zweite Zeitspanne mindestens doppelt so lange, insbesondere mindestens drei Mal so lange, wie die erste Zeitspanne ist. Dadurch kann ein besonders wirkungsgradgünstiger Betrieb gewährleistet werden.

Bei einer besonders vorteilhaften Ausführungsform der Erfindung geht der ersten Zeitspanne eine weitere Zeitspanne vorweg, welche auch als dritte Zeitspanne bezeichnet wird. Dies bedeutet, dass die weitere Zeitspanne zeitlich vor der ersten Zeitspanne liegt. Während der weiteren Zeitspanne ist die eine Synchronisiereinrichtung unbetätigt, das eine Teilgetriebe aktiviert, das andere Teilgetriebe deaktiviert und das Losrad, welches der anderen Synchronisiereinrichtung des einen Teilgetriebes zugeordnet ist, drehfest mit der Welle des einen Teilgetriebes verbunden. Dadurch können der Energieverbrauch und somit der Kraftstoffverbrauch besonders gering gehalten werden.

Um einen besonders hohen Wirkungsgrad zu realisieren, ist es in weiterer Ausgestaltung der Erfindung vorgesehen, dass die weitere Zeitspanne mindestens doppelt so lange, insbesondere mindestens drei Mal so lange, wie die erste Zeitspanne ist.

Schließlich hat es sich als besonders vorteilhaft gezeigt, wenn die Betätigung beziehungsweise das Betätigen der einen Synchronisiereinrichtung umfasst, dass die eine Synchronisiereinrichtung, insbesondere wenigstens der zuvor genannte Aktor, angesteuert wird, so dass die wenigstens zwei Reibpartner der einen Synchronisiereinrichtung in gegenseitigen Reibkontakt gebracht, insbesondere bewegt, werden.

Ein zweiter Aspekt der Erfindung betrifft ein Doppelkupplungsgetriebe für ein Kraftfahrzeug, insbesondere für einen Kraftwagen wie beispielsweise einen Personenkraftwagen. Das Doppelkupplungsgetriebe weist wenigstens eine elektronische Recheneinrichtung auf, welche auch als Steuergerät bezeichnet wird. Insbesondere wird beispielsweise das erfindungsgemäße Verfahren gemäß dem ersten Aspekt der Erfindung mittels des Steuergeräts durchgeführt. Das Doppelkupplungsgetriebe gemäß dem zweiten Aspekt der Erfindung umfasst ferner wenigstens oder genau zwei Teilgetriebe, welche jeweils wenigstens eine Welle, wenigstens zwei Synchronisiereinrichtungen und wenigstens zwei auf der jeweiligen Welle angeordnete und den jeweiligen Synchronisiereinrichtungen zugeordnete Losräder aufweisen. Dabei ist das jeweilige Losrad mittels der jeweiligen zugeordneten Synchronisiereinrichtung mit der jeweiligen Welle des jeweiligen Teilgetriebes zu synchronisieren.

Um auf besonders einfache und kostengünstige Weise ein besonders vorteilhaftes Geräuschverhalten realisieren zu können, ist es erfindungsgemäß vorgesehen, dass die elektronische Recheneinrichtung dazu ausgebildet ist, zum Unterdrücken von Geräuschen eine der Synchronisiereinrichtungen eines der Teilgetriebe, insbesondere aktiviert beziehungsweise gezielt, zu betätigen, während das eine Teilgetriebe aktiviert ist, das andere Teilgetriebe deaktiviert ist, und das Losrad, welches der anderen Synchronisiereinrichtung des anderen Teilgetriebes zugeordnet ist, drehfest mit der Welle des einen Teilgetriebes verbunden ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt. Die Erfindung umfasst auch die Kombinationen der Merkmale der beschriebenen Ausführungsform.

Zu der Erfindung gehören auch Weiterbildungen des erfindungsgemäßen Doppelkupplungsgetriebes, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Doppelkupplungsgetriebes hier nicht noch einmal beschrieben.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: ausschnittsweise eine schematische Darstellung eines erfindungsgemäßen Doppelkupplungsgetriebes für ein Kraftfahrzeug; und
- Fig. 2: ein Diagramm zum Veranschaulichen des erfindungsgemäßen Verfahrens zum Betreiben des Doppelkupplungsgetriebes und insbesondere zum Unterdrücken von Geräuschen in dem Doppelkupplungsgetriebe.

Bei dem im Folgenden erläuterten Ausführungsbeispiel handelt es sich um eine bevorzugte Ausführungsform der Erfindung.

In den Figuren bezeichnen gleiche Bezugszeichen jeweils funktionsgleiche Elemente.

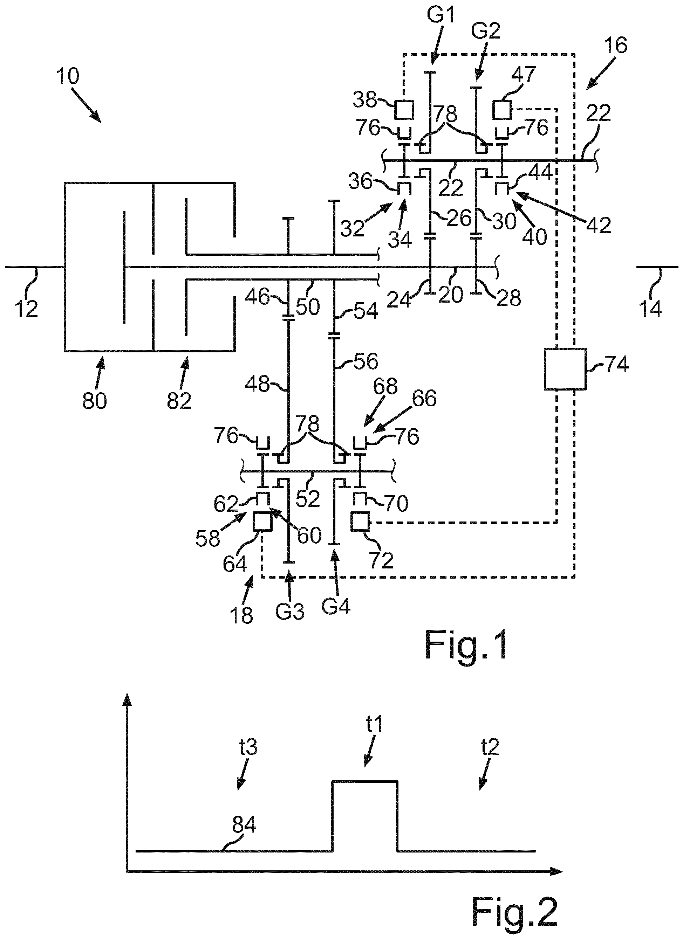

Fig. 1 zeigt in ausschnittsweise in einer schematischen Darstellung ein Doppelkupplungsgetriebe 10 für Kraftfahrzeug, insbesondere für einen Kraftwagen wie beispielsweise einen Personenkraftwagen. In seinem vollständig hergestellten Zustand umfasst das Kraftfahrzeug einen in den Figuren nicht dargestellten Antriebsmotor, welcher beispielsweise als Elektromotor oder aber als Verbrennungskraftmaschine, insbesondere als Hubkolbenmotor, ausgebildet ist. Der Antriebsmotor weist eine in Fig. 1 ausschnittsweise erkennbare Abtriebswelle 12 auf, welche beispielsweise als Kurbelwelle ausgebildet ist. Über die Abtriebswelle 12 kann der Antriebsmotor wenigstens ein Drehmoment zum Antreiben des Kraftfahrzeugs bereitstellen. Das Kraftfahrzeug umfasst darüber hinaus eine in Fig. 1 ausschnittsweise erkennbare Ausgangswelle 14, auf welche das von dem Antriebsmotor über die Abtriebswelle 12 bereitgestellte Drehmoment über das Doppelkupplungsgetriebe 10 übertragen werden kann. Unter dem Merkmal, dass der Antriebsmotor das Drehmoment über die Abtriebswelle 12 bereitstellt beziehungsweise bereitstellen kann, ist zu verstehen, dass die Abtriebswelle 12 das Drehmoment bereitstellen kann beziehungsweise bereitstellt.

Das Doppelkupplungsgetriebe 10 weist ein erstes Teilgetriebe 16 und ein zweites Teilgetriebe 18 auf. Das erste Teilgetriebe 16 weist eine erste Welle 20 auf, welche beispielsweise eine Eingangswelle des ersten Teilgetriebes 16 ist. Des Weiteren weist das erste Teilgetriebe 16 eine zweite Welle 22 auf, welche beispielsweise eine Ausgangswelle des Teilgetriebes 16 ist. Insgesamt weist das Doppelkupplungsgetriebe 10 beispielsweise sieben Vorwärtsgänge zum Bewirken einer Vorwärtsfahrt des Kraftfahrzeugs und wenigstens oder genau einen Rückwärtsgang zum Bewirken einer Rückwärtsfahrt auf. Die Vorwärtsgänge und der Rückwärtsgang sind Gänge, so dass das Doppelkupplungsgetriebe 10 insgesamt wenigstens oder genau acht Gänge aufweist. Dabei weist das Teilgetriebe 16 vier erste der Gänge auf, während das Teilgetriebe 18 vier zweite der Gänge aufweist. Mit anderen Worten bildet das jeweilige Teilgetriebe 16 beziehungsweise 18 vier der acht Gänge des Doppelkupplungsgetriebes 10. Ein erster der Gänge ist in Fig. 1 mit G1 bezeichnet, wobei ein zweiter der Gänge in Fig. 1 mit G2 bezeichnet ist. Dabei sind die Gänge G1 und G2 durch das Teilgetriebe 16 gebildet. Aus Fig. 1 ist erkennbar, dass der Gang G1 und somit das Teilgetriebe 16 Zahnräder 24 und 26 aufweist, welche über jeweilige Verzahnungen miteinander kämmen beziehungsweise in Eingriff miteinander stehen. Dabei werden die Zahnräder 24 und 26 auch als Gangräder bezeichnet. Das Zahnrad 24 ist ein Festrad, das permanent drehfest mit der Welle 20 verbunden ist. Demgegenüber ist jedoch das Zahnrad 26 ein Losrad, das drehbar auf der Welle 22 angeordnet ist und somit insbesondere dann, wenn das Zahnrad 26 nicht drehfest mit der Welle 22 verbunden ist, relativ zu der Welle 22 gedreht werden kann beziehungsweise relativ zu der Welle 22 dreht.

Der Gang G2 und somit das Teilgetriebe 16 weist Zahnräder 28 und 30 auf, welche über jeweilige Verzahnungen miteinander kämmen. Dabei ist das Zahnrad 28 ein Festrad, da es permanent drehfest mit der Welle 20 verbunden ist. Das Zahnrad 30 ist jedoch ein Losrad, da es drehbar auf der Welle 22 angeordnet ist. Die Zahnräder 28 und 30 sind Gangräder des Gangs G2.

Dem Zahnrad 26 ist eine Schalteinrichtung 32 zugeordnet, mittels welches das Zahnrad 26 drehfest mit der Welle 22 verbunden werden kann. Dabei umfasst die Schalteinrichtung 32 eine Synchronisiereinrichtung 34, mittels welcher das Zahnrad 26 mit der Welle 22 synchronisiert werden kann. Die Synchronisiereinrichtung 34 und somit die Schalteinrichtung 32 umfasst beispielsweise eine auch als Schiebemuffe bezeichnete Schaltmuffe 36, welche in axialer Richtung der Welle 22 und somit des Zahnrads 26 relativ zu dem Zahnrad 26 und relativ zu der Welle 22 zwischen wenigstens einer Koppelstellung und wenigstens einer Entkoppelstellung verschoben werden kann. Hierzu umfassen die Synchronisiereinrichtung 34 und somit die Schalteinrichtung 32 einen Aktor 38, mittels welchem die Schaltmuffe 36 verschoben werden kann.

Dementsprechend ist in dem Zahnrad 30 eine Schalteinrichtung 40 vorgesehen, mittels welcher das Zahnrad 30 drehfest mit der Welle 22 verbunden werden kann. Die Schalteinrichtung 40 umfasst eine Synchronisiereinrichtung 42, mittels welcher das Zahnrad 30 mit der Welle 22 synchronisiert werden kann. Die Synchronisiereinrichtung 42 und somit die Schalteinrichtung 40 umfassen eine auch als Schiebemuffe bezeichnete Schaltmuffe 44, welche in axialer Richtung der Welle 22 und somit des Zahnrads 30 relativ zu der Welle 22 und relativ zu dem Zahnrad 30 zwischen wenigstens einer Koppelstellung und wenigstens einer Entkoppelstellung verschoben werden kann. Hierzu umfassen die Synchronisiereinrichtung 42 und die Schalteinrichtung 40 einen Aktor 47, mittels welchem die auch als Schiebemuffe bezeichnete Schaltmuffe 44 verschoben werden kann. In der jeweiligen Entkoppelstellung ist das jeweilige Zahnrad 26 beziehungsweise 30 von der Welle 22 entkoppelt, so dass sich das Zahnrad 26 beziehungsweise 30 relativ zu der Welle 22 drehen kann beziehungsweise so dass keine Drehmomente zwischen dem Zahnrad 26 beziehungsweise 30 und der Welle 22 übertragen werden können. In der jeweiligen Koppelstellung jedoch ist das jeweilige Zahnrad 26 beziehungsweise 30, insbesondere über die jeweilige Synchronisiereinrichtung 34 beziehungsweise 42, drehfest, insbesondere formschlüssig, mit der Welle 22 verbunden, so dass Drehmomente zwischen der Welle 22 und dem Zahnrad 26 beziehungsweise 30, insbesondere über die Schalteinrichtung 32 beziehungsweise 40, übertragen werden können.

Ein dritter der Gänge ist in Fig. 1 mit G3 bezeichnet, und ein vierter der Gänge ist in Fig. 1 mit G3 bezeichnet. Die Gänge G3 und G4 sind Bestandteile des Teilgetriebes 18 beziehungsweise durch das Teilgetriebe 18 gebildet. Der Gang G3 und somit das Teilgetriebe 18 umfassen Zahnräder 46 und 48, welche über jeweilige Verzahnungen miteinander kämmen. Außerdem umfasst das Teilgetriebe 18 eine Welle 50, welche beispielsweise als eine Eingangswelle des Teilgetriebes 18 ausgebildet ist. Des Weiteren umfasst das Teilgetriebe 18 eine Welle 52, welche beispielsweise als Ausgangswelle des Teilgetriebes 18 ausgebildet ist. Das Zahnrad 46 ist ein Festrad, das permanent drehfest mit der Welle 50 verbunden ist. Demgegenüber ist das Zahnrad 48 ein Losrad, das drehbar auf der Welle 52 angeordnet ist. Die Zahnräder 46 und 48 sind Gangräder des Gangs G3.

Der Gang G4 und somit das Teilgetriebe 18 umfassen des Weiteren Zahnräder 54 und 56, welche über jeweilige Verzahnungen miteinander kämmen und Gangräder des Gangs G4 sind. Das Zahnrad 54 ist ein Festrad, das permanent drehfest mit der Welle 50 verbunden ist. Demgegenüber ist das Zahnrad 56 ein Losrad, das drehbar auf der Welle 52 angeordnet, insbesondere gelagert, ist.

Dem Zahnrad 48 ist eine Schalteinrichtung 58 zugeordnet, mittels welcher das Zahnrad 48 drehfest mit der Welle 52 verbunden werden kann. Dabei umfasst die Schalteinrichtung 58 eine Synchronisiereinrichtung 60, mittels welcher das Zahnrad 48 mit der Welle 52 synchronisiert werden kann. Die Synchronisiereinrichtung 60 und somit die Schalteinrichtung 58 umfassen eine Schaltmuffe 62, welche in axialer Richtung der Welle 52 und somit des Zahnrads 48 relativ zu dem Zahnrad 48 und relativ zu der Welle 52 zwischen wenigstens einer Koppelstellung und wenigstens einer Entkoppelstellung verschoben werden kann. Hierzu umfassen die Synchronisiereinrichtung 60 und somit die Schalteinrichtung 58 einen Aktor 64, mittels welcher die Schaltmuffe 62 verschoben werden kann.

Dementsprechend ist dem Zahnrad 56 eine Schalteinrichtung 66 zugeordnet, mittels welcher das Zahnrad 56 drehfest mit der Welle 52 verbunden werden kann. Hierzu umfasst die Schalteinrichtung 66 eine Synchronisiereinrichtung 68, mittels welcher das Zahnrad 56 mit der Welle 52 synchronisiert werden kann. Die Synchronisiereinrichtung 68 und somit die Schalteinrichtung 66 umfassen eine Schaltmuffe 70, welche in axialer Richtung der Welle 52 und somit des Zahnrads 56 relativ zu der Welle 52 und relativ zu dem Zahnrad 56 zwischen wenigstens einer Koppelstellung und wenigstens einer Entkoppelstellung verschoben werden kann. Hierzu umfassen die Synchronisiereinrichtung 68 und die Schalteinrichtung 66 einen Aktor 72, mittels welchem die Schaltmuffe 70 verschoben werden kann. Der jeweilige Aktor 38, 46, 64 beziehungsweise 72 ist beispielsweise elektrisch und/oder pneumatisch und/oder hydraulisch betreibbar beziehungsweise betätigbar.

In der jeweiligen Entkoppelstellung der jeweiligen Schaltmuffe 62 beziehungsweise 70 ist das jeweilige Zahnrad 48 beziehungsweise 56 von der Welle 52 entkoppelt, so dass keine Drehmomente zwischen dem jeweiligen Zahnrad 48 beziehungsweise 56 und der Welle 52 übertragen werden können. In der jeweiligen Koppelstellung der Schaltmuffe 62 beziehungsweise 70 jedoch ist das Zahnrad 48 beziehungsweise 56 über die Schaltmuffe 62 beziehungsweise 70 drehfest, insbesondere formschlüssig drehfest, mit der Welle 52 verbunden, so dass Drehmomente zwischen dem Zahnrad 48 beziehungsweise 56 und der Welle 52, insbesondere über die jeweilige Synchronisiereinrichtung 60 beziehungsweise 68, übertragen werden können.

Aus Fig. 1 ist erkennbar, dass das Zahnrad 26 der Synchronisiereinrichtung 34 zugeordnet ist beziehungsweise umgekehrt. Das Zahnrad 30 ist der Synchronisiereinrichtung 42 zugeordnet beziehungsweise umgekehrt. Das Zahnrad 48 ist der Synchronisiereinrichtung 60 zugeordnet beziehungsweise umgekehrt, und das Zahnrad 56 ist der Synchronisiereinrichtung 68 zugeordnet beziehungsweise umgekehrt.

Das Doppelkupplungsgetriebe 10 umfasst darüber hinaus eine auch als Steuergerät bezeichnete elektronische Recheneinrichtung 74, welche beispielsweise signaltechnisch mit den Aktoren 38, 46, 64 und 72 gekoppelt ist. Dadurch kann die Recheneinrichtung 74 die Aktoren 38, 46, 64 und 72 ansteuern. Durch ein solches Ansteuern des jeweiligen Aktors 38, 46, 64 beziehungsweise 72 kann die elektronische Recheneinrichtung 74 über den jeweiligen Aktor 38, 46, 64 und 72 ein Verschieben der jeweiligen Schaltmuffe 36, 44, 62 beziehungsweise 70 bewirken. Insbesondere kann die elektronische Recheneinrichtung 74 durch Ansteuern des Aktors 38, 46, 64 beziehungsweise 72 die jeweilige Synchronisiereinrichtung 34, 42, 60 beziehungsweise 68 betätigen. Unter einer beziehungsweise der Betätigung der jeweiligen Synchronisiereinrichtung 34, 42, 60 beziehungsweise 68 ist zu verstehen, dass wenigstens zwei Reibpartner 76 und 78 der jeweiligen Synchronisiereinrichtung 34, 42, 60 beziehungsweise 68 in gegenseitigen Kontakt, insbesondere in gegenseitigen Reibkontakt, gebracht, insbesondere bewegt, werden. Der Reibpartner 76 ist dabei beispielsweise mit der jeweiligen Welle 22 beziehungsweise 52 mitdrehbar, wobei der jeweilige Reibpartner 76 vorzugsweise drehfest mit der Welle 22 beziehungsweise 52 verbunden ist. Beispielsweise ist der Reibpartner 76 durch die jeweilige Schaltmuffe 36, 44, 62 beziehungsweise 70 gebildet oder zumindest mit der jeweiligen Schaltmuffe 36, 44, 62 beziehungsweise 70 mitdrehbar.

Der Reibpartner 78 ist beispielsweise mit dem jeweiligen Losrad mitdrehbar. Insbesondere kann der jeweilige Reibpartner 78 drehfest mit dem jeweiligen Losrad verbunden sein. Durch den Reibkontakt zwischen den Reibpartnern 76 und 78 ist das jeweilige Losrad zumindest oder ausschließlich reibschlüssig, das heißt durch Reibung mit der Welle 22 beziehungsweise 52 gekoppelt, wobei der Reibkontakt durch Betätigen der jeweiligen Synchronisiereinrichtung 34, 42, 60 beziehungsweise 68 bewirkt beziehungsweise eingestellt wird. Im Rahmen eines Einlegens des zunächst ausgelegten jeweiligen Gangs G1, G2, G3 beziehungsweise G4 kann durch den Reibkontakt eine daraus resultierende Reibung zwischen den Reibpartnern 76 und 78 das jeweilige Losrad mit der jeweiligen Welle 22 beziehungsweise 52 synchronisiert werden.

Wie außerdem aus Fig. 1 erkennbar ist, ist dem Teilgetriebe 16 eine erste Kupplung 80 des Doppelkupplungsgetriebes 10 zugeordnet, und dem Teilgetriebe 18 ist eine zweite Kupplung 82 des Doppelkupplungsgetriebes 10 zugeordnet. Die jeweilige Kupplung 80 beziehungsweise 82 kann geöffnet und geschlossen werden. Vorzugsweise ist es vorgesehen, dass die Kupplung 82 geöffnet ist, während die Kupplung 80 geschlossen ist. Während die Kupplung 82 geschlossen ist, ist vorzugsweise die Kupplung 80 geöffnet. Ist die Kupplung 80 geschlossen, während die Kupplung 82 geöffnet ist, so ist das Teilgetriebe 16 aktiviert beziehungsweise aktiv, während das Teilgetriebe 18 deaktiviert beziehungsweise passiv ist. Ist die Kupplung 82 geschlossen, während die Kupplung 80 geöffnet ist, so ist das Teilgetriebe 18 aktiviert beziehungsweise aktiv, während das Teilgetriebe 16 deaktiviert beziehungsweise passiv ist.

Um nun unerwünschte Geräusche zu vermeiden und somit ein besonders vorteilhaftes Geräuschverhalten des Doppelkupplungsgetriebes 10, insbesondere während seines Betriebs, auf besonders einfache und kostengünstige Weise realisieren zu können, wird ein Verfahren zum Unterdrücken von Geräuschen in dem Doppelkupplungsgetriebe 10 durchgeführt. Dabei wird beispielsweise zum Unterdrücken von Geräuschen in dem Doppelkupplungsgetriebe 10 die Synchronisiereinrichtung 42 des Teilgetriebes 16 betätigt, während das Teilgetriebe 16 aktiviert ist, das Teilgetriebe 18 deaktiviert ist und das Zahnrad 26 drehfest mit der Welle 22 verbunden ist.

Die jeweilige Synchronisiereinrichtung 34, 42, 60 beziehungsweise 68 ist beispielsweise als eine Reibkonussynchronisierung ausgebildet, über welche der jeweilige, auch als Gangstufe bezeichnete Gang G1, G2, G3 beziehungsweise G4 schaltbar ist, das heißt geschaltet werden kann.

Da das Zahnrad 26 über die Synchronisiereinrichtung 34 und somit über die Schalteinrichtung 32 drehfest mit der Welle 22 verbunden ist, ist vorliegend der Gang G1 ein aktueller, geschalteter beziehungsweise eingelegter Fahrgang, wobei sich beispielsweise alle anderen Schaltelemente des Teilgetriebes 16 in ihrer Neutralstellung befinden beziehungsweise nicht betätigt sind, so dass beispielsweise alle anderen Losräder des Teilgetriebes 16 nicht mit der Welle 22 drehfest verbunden sind beziehungsweise sodass alle anderen Gänge des Teilgetriebes 16 ausgelegt beziehungsweise deaktiviert sind.

In dem passiven Teilgetriebe 18 ist entweder kein Gang geschaltet oder, insbesondere genau, einer der Gänge des Teilgetriebes 18 ist vorgewählt. Bei dem in Fig. 1 veranschaulichten Ausführungsbeispiel befindet sich die Schaltmuffe 62 in ihrer Entkoppelstellung, während sich die Schaltmuffe 70 in ihrer Koppelstellung befindet. Dadurch ist das Zahnrad 56 drehfest mit der Welle 52 verbunden, so dass der Gang G4 vorgewählt ist. Jedoch ist die Kupplung 82 geöffnet, so dass das Teilgetriebe 18 deaktiviert ist. Alle anderen Schaltelemente sind beispielsweise in ihrer Neutralstellung beziehungsweise nicht geschaltet, so dass beispielsweise alle anderen Gänge ausgelegt sind beziehungsweise dass alle anderen Losräder des Teilgetriebes 18 nicht drehfest mit der Welle 52 verbunden sind.

Insbesondere wird die Synchronisiereinrichtung 42 derart betätigt, dass ein drehfestes Verbinden des Zahnrads 30 mit der Welle 22 unterbleibt. Zwar entsteht durch die Betätigung der Synchronisiereinrichtung 42 eine insbesondere ausschließliche, reibschlüssige Kopplung des Zahnrads 30 mit der Welle 22, jedoch wird eine Relativdrehung zwischen der Welle 22 und dem Zahnrad 30 zugelassen, so dass ein drehfeste Kopplung des Zahnrads 30 mit der Welle 22 unterbleibt. Durch das Betätigen der Synchronisiereinrichtung 42 kann ein zeitlich und in seiner Höhe definierbares Drehmoment erzeugt werden, welches beispielsweise über den beschriebenen Reibkontakt zwischen den Reibpartnern 76 und 78 der Synchronisiereinrichtung 42 zwischen der Welle 22 und dem Zahnrad 30 übertragen wird. Dadurch kann beispielsweise ein unerwünschtes Freischwingen wenigstens eines oder mehrerer Bereiche des Doppelkupplungsgetriebes 10 vermieden werden. Dadurch kann das Doppelkupplungsgetriebe 10 besonders reibungsarm ausgestaltet werden. Gleichzeitig kann ein vorteilhaftes Geräuschverhalten realisiert werden, da ein geräuscherzeugendes Freischwingen beziehungsweise geräuscherzeugende Schwingungen durch das aktive Betätigen der Synchronisiereinrichtung 42 aktiv unterdrückt werden kann. Insbesondere können optimierte Lagerungen und/oder Dichtungen und/oder ein optimiertes Kupplungsschleppmoment eingesetzt werden, um die innere Reibung des Doppelkupplungsgetriebes 10 besonders gering halten zu können.

Fig. 2 zeigt ein Diagramm zum Veranschaulichen des Verfahrens. Ein in das Diagramm eingetragener Verlauf 84 veranschaulicht die Betätigung der Synchronisiereinrichtung 42. Aus Fig. 2 ist erkennbar, dass die Betätigung der Synchronisiereinrichtung 42 während einer ersten Zeitspanne t1 beibehalten wird. Nach der Zeitspanne t1 wird die Betätigung der Synchronisiereinrichtung 42 beendet, so dass sich an die erste Zeitspanne t1 eine zweite Zeitspanne t2 anschließt. Während der Zeitspanne t2 sind die Synchronisiereinrichtung 42 unbetätigt, das Teilgetriebe 16 aktiviert, das Teilgetriebe 18 deaktiviert, das Zahnrad 26 drehfest mit der Welle 22 verbunden und das Zahnrad 30 von der Welle 22 entkoppelt beziehungsweise sind alle Losräder des Teilgetriebes 16 mit Ausnahme des Zahnrads 26 von der Welle 22 entkoppelt, so dass nicht drehfest mit der Welle 22 verbunden.

Ferner ist aus Fig. 2 erkennbar, dass der ersten Zeitspanne t1 eine weitere, dritte Zeitspanne t3 vorweggeht, während welcher die Synchronisiereinrichtung 42 unbetätigt ist, das Teilgetriebe 16 aktiviert ist, das Teilgetriebe 18 deaktiviert ist und das Zahnrad 26 drehfest mit der Welle 22 verbunden ist und das Zahnrad 30 von der Welle 22 entkoppelt ist. Somit findet die Betätigung der Synchronisiereinrichtung 42 nur vorübergehend statt und unterbleibt ansonsten, wodurch ein besonders wirkungsgradgünstiger und somit energieeffizienter Betrieb gewährleistet werden kann.

## Patentansprüche

1. Verfahren zum Unterdrücken von Geräuschen in einem zwei Teilgetriebe (16, 18) und je Teilgetriebe (16, 18) wenigstens zwei Synchronisiereinrichtungen (34, 42, 60, 68) aufweisenden Doppelkupplungsgetriebe (10) für ein Kraftfahrzeug, wobei mittels der jeweiligen Synchronisiereinrichtung (34, 42, 60, 68) eine jeweilige Welle (22, 52) des jeweiligen Teilgetriebes (16, 18) mit einem jeweiligen, auf der jeweiligen Welle (22, 52) angeordneten und der jeweiligen Synchronisiereinrichtung (34, 42, 60, 68) zugeordneten Losrad (26, 30, 48, 56) des jeweiligen Teilgetriebes (16, 18) zu synchronisieren ist, wobei zum Unterdrücken von Geräuschen eine (42) der wenigstens zwei Synchronisiereinrichtungen (34, 42, 60, 68) eines der Teilgetriebe (16, 18) betätigt wird, während das eine Teilgetriebe (16) aktiviert ist, das andere Teilgetriebe (18) deaktiviert ist und ein Losrad (26), welches der wenigstens einen anderen (34) der wenigstens zwei Synchronisiereinrichtungen (34, 42) des einen Teilgetriebes (16) zugeordnet ist, drehfest mit der Welle (22) des einen Teilgetriebes (16) verbunden ist, **dadurch gekennzeichnet, dass** die Betätigung der einen (42) der wenigstens zwei Synchronisiereinrichtungen (34, 42) des einen Teilgetriebes (16) überwacht wird, um ein gleichzeitiges Einlegen von zwei Gängen des einen Teilgetriebes (16) zu verhindern, wobei das gleichzeitige Einlegen von zwei Gängen durch eine Begrenzung des Schaltwegs der einen (42) der wenigstens zwei Synchronisiereinrichtungen (34, 42) verhindert wird und wobei der Schaltweg durch eine Schaltwegmessung überwacht wird.

2. Verfahren nach Anspruch 1,
**dadurch gekennzeichnet, dass**
die eine (42) der wenigstens zwei Synchronisiereinrichtungen (34, 42) des einen Teilgetriebes (16) derart betätigt wird, dass ein drehfestes Verbinden des dieser einen Synchronisiereinrichtung (42) zugeordneten Losrads (30) des einen Teilgetriebes (16) mit der Welle (22) des einen Teilgetriebes (16) unterbleibt.

3. Verfahren nach Anspruch 1 oder 2,
**dadurch gekennzeichnet, dass**
die Betätigung der einen (42) der wenigstens zwei Synchronisiereinrichtungen (34, 42) während einer Zeitspanne (t1) beibehalten wird.

4. Verfahren nach Anspruch 3,
**dadurch gekennzeichnet, dass**
die Zeitspanne (t1) länger als eine Sekunde, insbesondere länger als fünf Sekunden und vorzugsweise länger als zehn Sekunden, ist.

5. Verfahren nach Anspruch 3 oder 4,
**dadurch gekennzeichnet, dass**
die Betätigung der einen (42) der wenigstens zwei Synchronisiereinrichtungen (34, 42) nach der Zeitspanne (t1) beendet wird, sodass sich an die Zeitspanne (t1) eine zweite Zeitspanne (t2) anschließt, während welcher diese eine Synchronisiereinrichtung (42) unbetätigt ist, das eine Teilgetriebe (16) aktiviert ist, das andere Teilgetriebe (18) deaktiviert ist und das Losrad (26), welches der wenigstens einen anderen (34) der wenigstens zwei Synchronisiereinrichtungen (34, 42) des einen Teilgetriebes (16) zugeordnet ist, drehfest mit der Welle (22) des einen Teilgetriebes (16) verbunden ist.

6. Verfahren nach Anspruch 5,
**dadurch gekennzeichnet, dass**
die zweite Zeitspanne (t2) mindestens doppelt so lange, insbesondere mindestens dreimal so lange, wie die erste Zeitspanne (t1) ist.

7. Verfahren nach einem der Ansprüche 3 bis 6,
**dadurch gekennzeichnet, dass**
der Zeitspanne (t1) eine weitere Zeitspanne (t3) vorweggeht, während welcher die eine (42) der wenigstens zwei Synchronisiereinrichtungen (34, 42) unbetätigt ist, das eine Teilgetriebe (16) aktiviert ist, das andere Teilgetriebe (18) deaktiviert ist und das Losrad (26), welches der wenigstens einen anderen (34) der wenigstens zwei Synchronisiereinrichtungen (34, 42) des einen Teilgetriebes zugeordnet (16) ist, drehfest mit der Welle (22) des einen Teilgetriebes (16) verbunden ist.

8. Verfahren nach Anspruch 7,
**dadurch gekennzeichnet, dass**
die weitere Zeitspanne (t3) mindestens doppelt so lange, insbesondere mindestens dreimal so lange, wie die erste Zeitspanne (t1) ist.

9. Verfahren nach einem der vorhergehenden Ansprüche,
**dadurch gekennzeichnet, dass**
die Betätigung der einen (42) der wenigstens zwei Synchronisiereinrichtungen (34, 42) umfasst, dass diese eine Synchronisiereinrichtung (42), insbesondere wenigstens ein Aktor (46) dieser der einen Synchronisiereinrichtung (42), angesteuert wird, sodass wenigstens zwei Reibpartner (76, 78) dieser der einen Synchronisiereinrichtung (42) in gegenseitigen Reibkontakt gebracht werden.

## Claims

1. Method for suppressing noise in a dual-clutch gearbox (10), having two partial gearboxes (16, 18) and at least two synchronization devices (34, 42, 60, 68) for each partial gearbox (16, 18), for a motor vehicle, wherein a respective shaft (22, 52) of the respective partial gearbox (16, 18) can be synchronized with a respective idler gear (26, 30, 48, 56), arranged on the respective shaft (22, 52) and associated with the respective synchronization device (34, 42, 60, 68), of the respective partial gearbox (16, 18) by means of the respective synchronization device (34, 42, 60, 68), wherein, in order to suppress noise, one synchronization device (42) of the at least two synchronization devices (34, 42, 60, 68) of one of the partial gearboxes (16, 18) is operated, while the one partial gearbox (16) is activated, the other partial gearbox (18) is deactivated and an idler gear (26), which is associated with the at least one other synchronization device (34) of the at least two synchronization devices (34, 42) of the one partial gearbox (16), is connected in a rotationally fixed manner to the shaft (22) of the one partial gearbox (16), **characterized in that** the operation of the one synchronization device (42) of the at least two synchronization devices (34, 42) of the one partial gearbox (16) is monitored in order to prevent simultaneous engagement of two gears of the one partial gearbox (16), wherein the simultaneous engagement of two gears is prevented by limiting the shift travel of the one synchronization device (42) of the at least two synchronization devices (34, 42) and wherein the shift travel is monitored by a shift travel measurement.

2. Method according to Claim 1, **characterized in that** the one synchronization device (42) of the at least two synchronization devices (34, 42) of the one partial gearbox (16) is operated in such a way that rotationally fixed connection of the idler gear (30), associated with this one synchronization device (42), of the one partial gearbox (16) to the shaft (22) of the one partial gearbox (16) does not occur.

3. Method according to Claim 1 or 2, **characterized in that** the operation of the one synchronization device (42) of the at least two synchronization devices (34, 42) is maintained over a time period (t1).

4. Method according to Claim 3, **characterized in that** the time period (t1) is longer than one second, in particular longer than five seconds, and preferably longer than ten seconds.

5. Method according to Claim 3 or 4, **characterized in that** the operation of the one synchronization device (42) of the at least two synchronization devices (34, 42) is terminated after the time period (t1), so that a second time period (t2) follows the time period (t1), during which second time period this one synchronization device (42) is not operated, the one partial gearbox (16) is activated, the other partial gearbox (18) is deactivated and the idler gear (26), which is associated with the at least one other synchronization device (34) of the at least two synchronization devices (34, 42) of the one partial gearbox (16), is connected in a rotationally fixed manner to the shaft (22) of the one partial gearbox (16).

6. Method according to Claim 5, **characterized in that** the second time period (t2) is at least twice as long, in particular at least three times as long, as the first time period (t1).

7. Method according to one of Claims 3 to 6, **characterized in that** a further time period (t3) precedes the time period (t1), during which further time period the one synchronization device (42) of the at least two synchronization devices (34, 42) is not operated, the one partial gearbox (16) is activated, the other partial gearbox (18) is deactivated and the idler gear (26), which is associated with the at least one other synchronization device (34) of the at least two synchronization devices (34, 42) of the one partial gearbox (16), is connected in a rotationally fixed manner to the shaft (22) of the one partial gearbox (16).

8. Method according to Claim 7, **characterized in that** the further time period (t3) is at least twice as long, in particular at least three times as long, as the first time period (t1).

9. Method according to one of the preceding claims, **characterized in that** the operation of the one synchronization device (42) of the at least two synchronization devices (34, 42) comprises this one synchronization device (42), in particular at least one actuator (46) of this one synchronization device (42), being actuated, so that at least two friction partners (76, 78) of this one synchronization device (42) are brought into mutual frictional contact.

## Revendications

1. Procédé pour inhiber des bruits dans une boîte de vitesses à double embrayage (10) pour un véhicule automobile, laquelle possède deux boîtes de vitesses partielles (16, 18) et au moins deux dispositifs de synchronisation (34, 42, 60, 68) pour chaque boîte de vitesses partielle (16, 18), un arbre respectif (22, 52) de la boîte de vitesses partielle (16, 18) respective étant à synchroniser au moyen du dispositif de synchronisation (34, 42, 60, 68) respectif avec un pignon libre (26, 30, 48, 56) respectif de la boîte de vitesses partielle (16, 18) respective, disposée sur l'arbre respectif (22, 52) et associée au dispositif de synchronisation (34, 42, 60, 68) respectif,
en vue d'inhiber les bruits, l'un (42) des au moins deux dispositifs de synchronisation (34, 42, 60, 68) de l'une des boîtes de vitesses partielles (16, 18) étant actionné, pendant qu'une boîte de vitesses partielle (16) est activée, l'autre boîte de vitesses partielle (18) étant désactivée et un pignon libre (26), lequel est associé à l'au moins une autre (34) des au moins deux dispositifs de synchronisation (34, 42) de ladite boîte de vitesses partielle (16), étant relié en rotation solidaire à l'arbre (22) de ladite boîte de vitesses partielle (16),
**caractérisé en ce que**
l'actionnement dudit (42) des au moins deux dispositifs de synchronisation (34, 42) de ladite boîte de vitesses partielle (16) est surveillé afin d'empêcher un engagement simultané de deux rapports de ladite boîte de vitesses partielle (16), l'engagement simultané de deux rapports étant empêché par une limitation de la course de changement de rapport dudit (42) des au moins deux dispositifs de synchronisation (34, 42) et la course de changement de rapport étant surveillée par une mesure de course de changement de rapport.

2. Procédé selon la revendication 1, **caractérisé en ce que** ledit (42) des au moins deux dispositifs de synchronisation (34, 42) de ladite boîte de vitesses partielle (16) est actionné de telle sorte qu'une liaison en rotation solidaire du pignon libre (30) de ladite boîte de vitesses partielle (16), qui est associé à ce dispositif de synchronisation (42), avec l'arbre (22) de ladite boîte de vitesses partielle (16) n'a pas lieu.

3. Procédé selon la revendication 1 ou 2, **caractérisé en ce que** l'actionnement dudit (42) des au moins deux dispositifs de synchronisation (34, 42) est maintenu pendant un intervalle de temps (t1).

4. Procédé selon la revendication 3, **caractérisé en ce que** l'intervalle de temps (t1) est plus long qu'une seconde, notamment plus long que cinq secondes et de préférence plus long que dix secondes.

5. Procédé selon la revendication 3 ou 4, **caractérisé en ce que** l'actionnement dudit (42) des au moins deux dispositifs de synchronisation (34, 42) prend fin après l'intervalle de temps (t1), de sorte qu'un deuxième intervalle de temps (t2) se rattache à l'intervalle de temps (t1), pendant lequel ce dispositif de synchronisation (42) est non actionné, ladite boîte de vitesses partielle (16) est activée, l'autre boîte de vitesses partielle (18) est désactivée et le pignon libre (26), qui est associé à l'au moins un autre (34) des au moins deux dispositifs de synchronisation (34, 42) de ladite boîte de vitesses partielle (16), est relié en rotation solidaire à l'arbre (22) de ladite boîte de vitesses partielle (16).

6. Procédé selon la revendication 5, **caractérisé en ce que** le deuxième intervalle de temps (t2) est au moins deux fois plus long, notamment au moins trois fois plus long, que le premier intervalle de temps (t1).

7. Procédé selon l'une des revendications 3 à 6, **caractérisé en ce que** l'intervalle de temps (t1) est précédé d'un intervalle de temps supplémentaire (t3), pendant lequel ledit (42) des au moins deux dispositifs de synchronisation (34, 42) est non actionné, ladite boîte de vitesses partielle (16) est activée, l'autre boîte de vitesses partielle (18) est désactivée et le pignon libre (26), qui est associé à l'au moins un autre (34) des au moins deux dispositifs de synchronisation (34, 42) de ladite boîte de vitesses partielle (16), est relié en rotation solidaire à l'arbre (22) de ladite boîte de vitesses partielle (16).

8. Procédé selon la revendication 7, **caractérisé en ce que** l'intervalle de temps supplémentaire (t3) est au moins deux fois plus long, notamment au moins trois fois plus long, que le premier intervalle de temps (t1).

9. Procédé selon l'une des revendications précédentes, **caractérisé en ce que** l'actionnement dudit (42) des au moins deux dispositifs de synchronisation (34, 42) comprend qu'un dispositif de synchronisation (42), notamment au moins un actionneur (46) de ce dispositif de synchronisation (42), est commandé, de sorte qu'au moins deux partenaires de friction (76, 78) de ce dispositif de synchronisation (42) sont amenés en contact de friction mutuel.
